## Europäisches Patentamt

## European Patent Office

## Office européen des brevets

(19)

(11)  **EP 0 984 572 B1**

(12)  **FASCICULE DE BREVET EUROPEEN**

(45)  Date de publication et mention
de la délivrance du brevet:
**18.08.2004   Bulletin 2004/34**

(51)  Int Cl.$^7$:  **H04B 10/135**

(21)  Numéro de dépôt: **99401670.7**

(22)  Date de dépôt: **05.07.1999**

(54)  **Dispositif de compensation de la dispersion de polarisation des canaux dans un signal a multiplexage en longueur d'onde**

Vorrichtung zur Polarisationsdispersionskompensation den Kanälen in einem WDM-Signal

Polarisation dispersion compensation device of the channels in a WDM signal

(84)  Etats contractants désignés:
**AT BE CH CY DE DK ES FI FR GB GR IE IT LI LU MC NL PT SE**

(30)  Priorité:  **06.07.1998  FR 9808624**

(43)  Date de publication de la demande:
**08.03.2000   Bulletin 2000/10**

(73)  Titulaire: **ALCATEL**
**75008 Paris (FR)**

(72)  Inventeurs:
 • **Bruyere, Franck**
**75014 Paris (FR)**

 • **Penninckx, Denis**
**91620 Nozay (FR)**

(74)  Mandataire: **Fournier, Michel Robert Marie et al**
**Compagnie Financière Alcatel**
**Département de Propriété Industrielle,**
**5, rue Noel Pons**
**92734 Nanterre Cedex (FR)**

(56)  Documents cités:
**EP-A- 0 412 717       FR-A- 2 758 029**
**US-A- 5 508 839**

## Description

L'invention concerne un dispositif de compensation de la dispersion de polarisation des canaux dans un signal à multiplexage en longueur d'onde.

L'invention s'applique aux systèmes de transmission à multiplexage en longueur d'onde (Wavelength Division Multiplexing - WDM - en terminologie anglo-saxonne).

Tous les types de fibres présentent un phénomène de dispersion de polarisation : une impulsion émise par le terminal émetteur est reçue déformée. Elle présente une durée supérieure à sa durée originale. Cette déformation est due au fait que le signal optique se dépolarise pendant la transmission. Le signal reçu à l'extrémité de la fibre de liaison peut être considéré comme constitué de deux composantes orthogonales, l'une correspondant à un état de polarisation pour lequel la vitesse de propagation est maximale (état principal de polarisation le plus rapide) et l'autre correspondant à un état de polarisation pour lequel la vitesse de propagation est minimale (état principal de polarisation le plus lent).

Autrement dit, un signal impulsionnel reçu à l'extrémité de la fibre de liaison peut être considéré comme étant composé d'un premier signal impulsionnel, polarisé suivant un état de polarisation privilégié, et arrivant en premier ; et d'un second signal impulsionnel se propageant suivant un état de propagation retardé, et arrivant avec un retard appelé retard différentiel instantané qui dépend notamment de la longueur de la fibre de liaison.

Si le terminal émetteur émet un signal optique constitué d'une impulsion très brève, le signal optique reçu par le terminal récepteur est constitué de deux impulsions successives polarisées orthogonalement et ayant un décalage temporel égal au retard différentiel instantané. Ce retard peut être de 20 ps pour une liaison de 100 km de longueur, comportant une fibre monomode telle qu'on fabriquait il y a quelques années.

La déformation des impulsions reçues par le terminal récepteur peut causer des erreurs de décodage des données transmises, par conséquent la dispersion de polarisation constitue un facteur limitant les performances des liaisons optiques aussi bien analogiques que numériques.

Actuellement, on sait fabriquer des fibres monomodes à faible dispersion de polarisation (environ 0,05 ps/ (km) $^{1/2}$). Cependant, une proportion importante des fibres monomodes installées au cours des dix dernières années présentent des dispersions de polarisation très élevées qui constituent un obstacle technique majeur pour la propagation des débits transmis. D'autre part, il n'est pas exclu de voir ce problème réapparaître pour les fibres à faible dispersion de polarisation que l'on sait produire aujourd'hui, si la course au débit se poursuit.

On sait réaliser des fibres à forte dispersion de polarisation, appelées aussi fibres à maintien de polarisation, qui permettent, en utilisant des tronçons de faible longueur, de procurer un retard différentiel fixe. En disposant judicieusement un tel composant (ou tout dispositif générateur de retard différentiel entre deux modes de polarisation orthogonaux) en série avec une liaison de transmission à forte dispersion de polarisation, on peut réaliser une compensation dite de la dispersion de polarisation. Ceci peut être réalisé soit en utilisant une fibre à maintien de polarisation de même retard différentiel que la liaison, mais en échangeant les états principaux de polarisation lent et rapide, soit en faisant coïncider un état principal de polarisation de l'ensemble constitué par la liaison et la fibre à maintien de polarisation avec l'état de polarisation de la source à l'émission. Pour ce faire on utilise un contrôleur de polarisation que l'on place entre la liaison et la fibre à maintien de polarisation.

La valeur du retard différentiel et les états principaux de polarisation d'une liaison varient dans le temps en fonction de nombreux facteurs, tels que les vibrations et la température. Un dispositif de compensation doit donc nécessairement être adaptatif et le retard différentiel de la fibre à maintien de polarisation choisi, de façon à être au moins égal à toutes les valeurs de retard différentiel que l'on veut compenser.

La dispersion de polarisation est l'un des problèmes difficiles à résoudre dans le cadre de la mise à niveau des réseaux de fibres optiques existants ayant des canaux dont les débits sont de 10 Gbit/s et plus.

On estime que 10 % de la durée d'un bit est la valeur maximum qui peut être tolérée pour la dispersion de polarisation, par exemple 10 ps à 10 Gbit/s et seulement 2,5 ps à 40 Gbit/s.

A ce jour, des dispositifs permettant de compenser la dispersion de polarisation ont été conçus. Mais aucun dispositif ne permet de résoudre le problème de la dispersion de polarisation dans le cadre d'un réseau en multiplexage en longueur d'onde, autrement que par une juxtaposition après démultiplexage de compensateurs monocanaux identiques. On pourra se reporter en particulier au dispositif ayant fait l'objet d'une demande de brevet français n° 96 16194 déposée le 30 décembre 1996 par le Déposant et qui concerne un tel système de transmission monocanal.

La présente invention a pour but de résoudre ce problème et de proposer des solutions qui ont une architecture optimisée, notamment en terme de coût.

La présente invention a pour objet un dispositif de compensation de la dispersion de polarisation pour des systèmes à multiplexage en longueur d'onde. Selon cette invention les solutions qui sont proposées reposent sur l'utilisation de multiplexeurs et démultiplexeurs en cascade, pour réaliser une compensation de la dispersion de polarisation de tous les canaux formant le multiplex.

Des architectures du dispositif sont prévues pour une implémentation en fin de ligne de transmission ou en milieu de ligne de transmission.

L'invention a plus particulièrement pour objet un dispositif de compensation de la dispersion de polarisation des canaux dans un signal à multiplexage en longueur d'onde, caractérisé en ce qu'il comprend en cascade une pluralité de modules de contrôle de polarisation associés respectivement auxdits canaux et un générateur à retard différentiel délivrant un signal multiplexé compensé, en ce que chaque module comprend :

- un multiplexeur à insertion-extraction ayant une première entrée pour recevoir un signal d'entrée multiplexé, une première sortie pour extraire dudit signal d'entrée multiplexé un signal de canal associé, une seconde entrée pour insérer un signal de canal modifié et une deuxième sortie pour délivrer un signal de sortie multiplexé modifié,
- un contrôleur de polarisation apte à recevoir ledit signal de canal extrait et à délivrer ledit signal de canal modifié,

  et en ce que le dispositif comprend en outre:

- une boucle d'asservissement pour commander les contrôleurs de polarisation en réponse respectivement aux propriétés optiques des signaux de canal dudit signal multiplexé compensé.

D'une façon générale, ces propriétés optiques seront évidemment choisies pour être représentatives de la qualité du signal multiplexé compensé de façon en fait à mesurer directement ou non les degrés de polarisation des signaux de canal. La boucle d'asservissement permettra alors d'optimiser cette qualité en agissant sur les contrôleurs de polarisation.

Selon un cas particulier, la boucle d'asservissement comprend des moyens de démultiplexage recevant le signal multiplexé compensé, des sorties d'extraction pour en extraire lesdits signaux de canal et des moyens de commande d'asservissement aptes à recevoir au moins une fraction des signaux issus desdites sorties d'extraction, à en mesurer les degrés de polarisation et à commander les contrôleurs de polarisation de manière à maximiser lesdits degrés de polarisation mesurés.

Selon une autre caractéristique, les moyens de démultiplexage comportent une pluralité de démultiplexeur en cascade, ce mode de réalisation étant adapté à l'utilisation de démultiplexeurs ayant une structure utilisant des tronçons de fibres à réseaux de Bragg.

Selon une autre caractéristique, les moyens de commande d'asservissement comportent pour chaque canal:

- un contrôleur de polarisation de boucle de contre-réaction,
- des moyens pour mesurer l'intensité totale de la fraction de signal issus d'une desdites premières sorties d'extraction,
- des moyens pour mesurer l'intensité d'une composante de cette fraction selon une direction de polarisation fixée et pour commander le contrôleur de polarisation de boucle de façon à maximiser cette intensité,
- des moyens pour calculer le degré de polarisation à partir de ladite intensité totale mesurée et de l'intensité mesurée selon la direction de polarisation fixée,
- des moyens de contre-réaction pour commander le contrôleur de polarisation du canal correspondant en fonction du degré de polarisation ainsi calculé, de telle façon que ce degré de polarisation soit maximisé.

Selon une autre caractéristique de l'invention, les multiplexeurs et démultiplexeurs utilisés ont une structure utilisant des tronçons de fibres à réseaux de Bragg (en terminologie anglo-saxonne : in-fiber Bragg gratings - IFBG's).

D'autres particularités et avantages de l'invention apparaîtront à la lecture de la description qui va suivre qui est donnée à titre d'exemple non limitatif et en regard des dessins sur lesquels :

- la figure 1A représente de façon schématique un système de transmission à multiplexage en longueur d'onde sur lequel on a implémenté un dispositif conforme à l'invention en fin de ligne,
- la figure 1B représente le schéma d'un système de transmission avec un dispositif conforme à l'invention destiné à être inséré dans la ligne de transmission,
- la figure 2 représente un dispositif conforme à l'invention destiné à être implémenté à la fin dé la ligne de transmission,
- la figure 3 représente un mode de réalisation du circuit de commande d'asservissement $CT_N$ selon la figure 2,
- la figure 4 représente un dispositif conforme à l'invention destiné à être implémenté sur la ligne de transmission,
- les figures 5A à 5C représentent trois modes de réalisation des démultiplexeurs (ODM),
- les figures 6A à 6C représentent trois modes de réalisation des multiplexeurs à insertion et extraction (OADM).

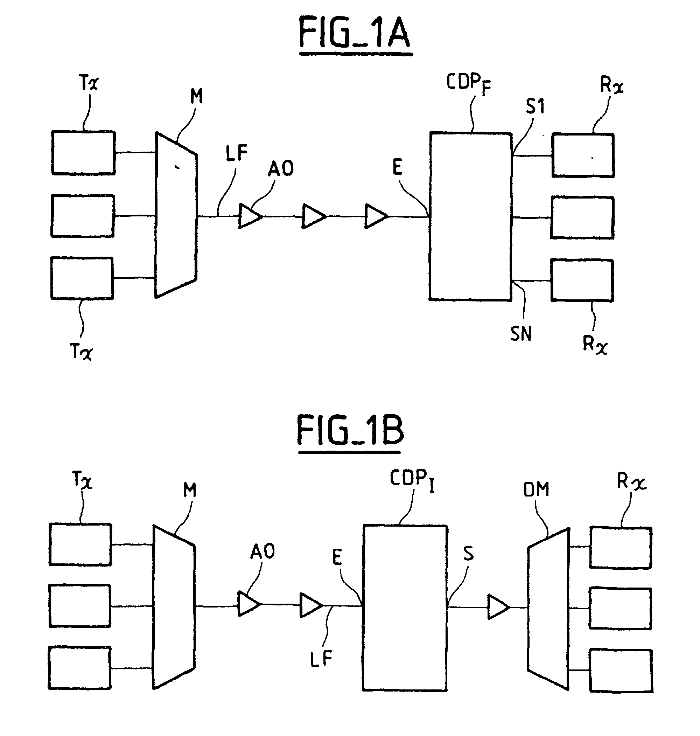

Le système de transmission optique à multiplexage par longueur d'onde qui est représenté sur la figure 1A comporte :

- des terminaux émetteurs Tx classiques, transmettant des données par exemple en modulant de manière binaire l'intensité d'une ou plusieurs porteuses optiques chaque porteuse étant une onde entièrement polarisée fournie par un laser ;
- un multiplexeur M de canaux multiplexant les signaux émis par les terminaux Tx pour obtenir le signal multiplexé MUX transmis par la ligne à fibre optique LF reliée au multiplexeur. Des amplificateurs optiques AO sont éventuellement intercalés le long de cette fibre LF pour compenser les pertes optiques ;
- le dispositif de compensation de la dispersion $CDP_F$ de polarisation dont une entrée est reliée à l'autre extrémité de la fibre LF et dont les sorties sont reliées respectivement à des terminaux de réception Rx.

Le système de transmission qui est représenté sur la figure 1B est identique à celui de la figure 1A à ceci près que le dispositif de compensation de la dispersion de polarisation $CDP_I$ est implémenté sur la ligne de transmission LF, une entrée E du dispositif recevant le multiplex entrant transmis par la ligne et une sortie S délivrant le multiplex sortant compensé sur cette même ligne.

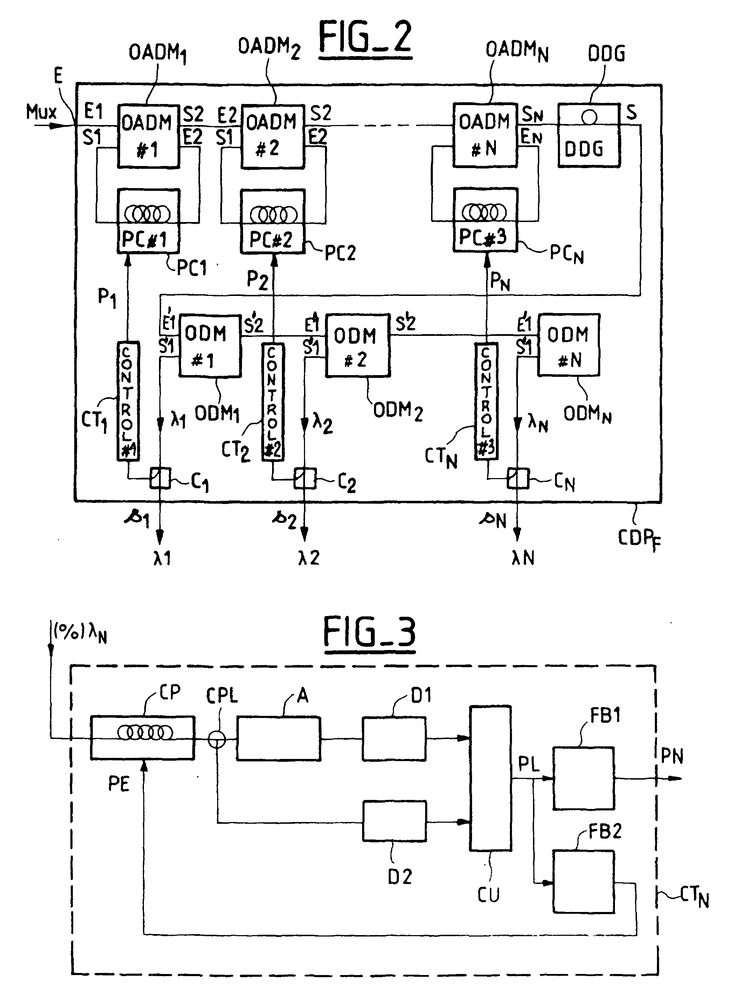

On va maintenant se reporter au schéma de la figure 2. Ce schéma représente un mode de réalisation du dispositif conforme à l'invention dans le cas où le dispositif est destiné à être implanté en fin de ligne, c'est à dire juste avant les récepteurs. Le dispositif permet en effet de démultiplexer le signal du multiplex et de fournir les différents signaux aux longueurs d'ondes correspondantes à chacun des terminaux récepteurs Rx.

Le dispositif comporte une cascade de modules de contrôle de polarisation munis de multiplexeurs optiques à insertion - extraction référencés respectivement $OADM1$ à $OADM_N$ et de contrôleurs de polarisation $PC_1$-$PC_N$.

Chaque multiplexeur à insertion-extraction comporte deux entrées E1, E2 et deux sorties S1 et S2. L'entrée E1 d'un multiplexeur à insertion-extraction reçoit le signal d'entrée multiplexé et l'entrée E2 d'un multiplexeur reçoit le signal modifié d'un canal à insérer dans le multiplex délivré en sortie S2 de ce multiplexeur à insertion-extraction.

Ainsi, le multiplexeur à insertion-extraction OADM1 reçoit le signal multiplexé Mux sur son entrée E1. Ce dispositif extrait le signal du canal à la longueur d'onde $\lambda 1$. Ce signal est disponible sur la sortie S1 de ce circuit, il est traité par un contrôleur de polarisation PC1 comme détaillé dans la suite et après traitement, le signal du canal $\lambda 1$ est réinjecté par l'entrée E2 du circuit OADM1 qui l'insère dans le multiplex sur sa sortie S2. Le circuit multiplexeur à insertion-extraction OADM2 reçoit sur son entrée E1 le signal multiplexé modifié issu de la sotie S2 du circuit OADM1, il extrait le signal du canal de longueur d'onde $\lambda 2$, délivre ce signal à sa sortie S1. Le signal extrait est traité par un contrôleur de polarisation PC2 qui fournit le signal du canal $\lambda 2$ à sa sortie pour l'injecter sur l'entrée E2 du circuit AODM2, lequel insère le signal de ce canal $\lambda 2$ dans

le multiplex de sortie délivré à la sortie S2 et ainsi de suite pour tous les autres multiplexeurs à insertion-extraction.

Le signal multiplexé délivré à la sortie $S_N$ du dernier multiplexeur à insertion-extraction de la cascade est injecté dans le générateur à retard différentiel DDG.

Ce générateur à retard différentiel DDG pourra être réalisé par exemple de manière classique par une fibre à maintien de polarisation. Le signal de sortie de ce circuit DDG constitue un signal multiplexé compensé. Ce dernier rentre dans une boucle d'asservissement qui permet de fournir pour chaque contrôleur de polarisation un signal de commande en réponse aux propriétés optiques du signal compensé de chaque canal.

Selon une réalisation préférée de l'invention la boucle d'asservissement comporte des moyens pour mesurer le degré de polarisation du signal compensé de chaque canal issu du dispositif engendrant un retard différentiel DDG et pour commander chacun des contrôleurs de polarisation de façon à maximiser les degrés de polarisation mesurés.

Selon un mode de réalisation préféré, cette boucle d'asservissement comprend en cascade une pluralité de démultiplexeurs $ODM1$ à $ODM_N$. Chaque démultiplexeur $ODM1$ - $ODM_N$ comporte une entrée $E'1$ apte à recevoir le signal multiplexé compensé restitué par le dispositif générateur à retard différentiel DDG et une première sortie $S'1$ pour en extraire le signal du canal associé dont une fraction est appliquée à l'entrée d'un circuit de commande d'asservissement respectivement $CT1$ - $CT_N$. Chaque circuit $CT1$ - $CT_N$ est apte à mesurer le degré de polarisation dudit signal optique du canal considéré et à commander le contrôleur de polarisation correspondant $PC1$ - $PC_N$, de manière à maximiser le degré de polarisation mesuré.

De façon pratique la sortie $S'1$ du démultiplexeur ODM1 est reliée à l'entrée d'un coupleur C1 qui permet de prélever une fraction du signal du canal porté par la longueur d'onde $\lambda 1$ (environ 5 % de ce signal) pour l'appliquer en entrée du circuit CT1 qui délivre le signal électrique de commande P1 du contrôleur de polarisation PC1. Une deuxième sortie de ce coupleur C1 qui correspond à la sortie s1 du dispositif $CDP_F$ fournit le signal du canal $\lambda 1$.

De la même façon, les démultiplexeurs ODM2 et $ODM_N$ délivrent en leur sortie $S'1$, respectivement le signal optique extrait des canaux $\lambda 2$ - $\lambda N$. Une fraction de ce signal optique extrait est fournie respectivement aux circuits CT2 à $CT_N$ qui délivrent les signaux électriques de commande des contrôleurs de polarisation PC2 à $PC_N$.

Les signaux extraits de chacun des canaux $\lambda 2$ à $\lambda_N$ se retrouvent aux sorties s2 à $s_N$ du dispositif $CDP_F$, ces signaux étant fournis respectivement par les coupleurs C2 à $C_N$.

On va maintenant détailler un mode de réalisation du circuit qui permet de commander les contrôleurs de polarisation PC1 à $PC_N$ de chacun des canaux extraits. On pourra se référer au schéma donné à la figure 3 qui illustre ce mode de réalisation.

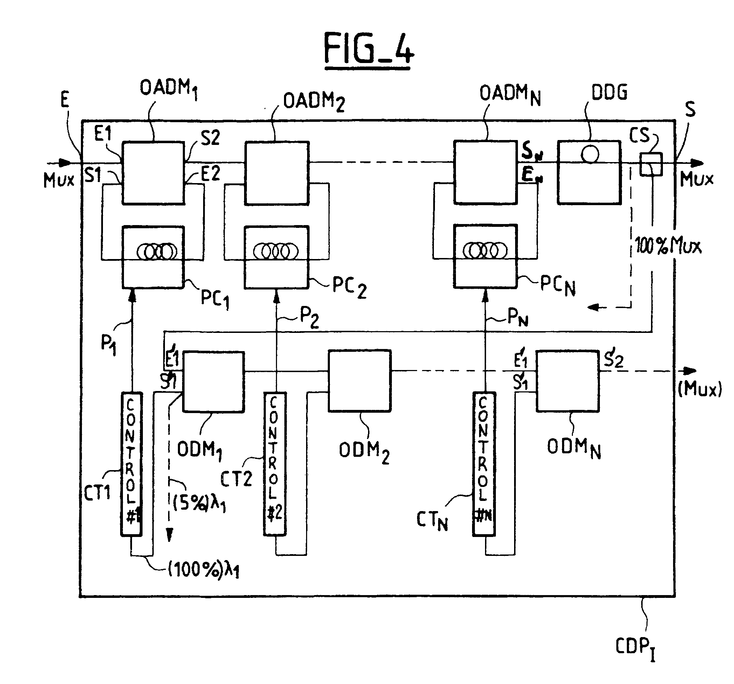

Le mode de réalisation du circuit $CT_N$ qui est donné sur cette figure est applicable à un dispositif de compensation de polarisation tel que représenté sur la figure 2 mais également à un dispositif de compensation de polarisation tel que représenté sur la figure 4 qui va être décrite à la suite. En effet, ce dispositif de commande est le même selon que le dispositif de compensation est placé en fin de ligne ou en milieu de ligne.

Le signal de canal est reçu à l'entrée d'un contrôleur de polarisation CP, la sortie de ce contrôleur de polarisation est appliquée à l'entrée d'un polariseur A, le signal de sortie de ce polariseur A est appliqué à l'entrée d'un premier détecteur photoélectrique D1 et la sortie du détecteur photoélectrique D1 est appliquée à l'entrée d'une unité de calcul CU. Une fraction du signal de sortie du contrôleur de polarisation CP est prélevée au moyen d'un coupleur CPL pour être appliquée à l'entrée d'un deuxième détecteur photoélectrique D2 dont la sortie est également appliquée à une deuxième entrée de l'unité de calcul CU.

L'unité de calcul a une sortie qui fournit un signal PL représentatif du degré de polarisation du signal optique à la sortie du générateur de retard différentiel DDG.

Le circuit $CT_N$ comprend en outre un dispositif de contre-réaction FB1 ayant une entrée reliée à la sortie de l'unité de calcul CU et une sortie fournissant le signal de commande électrique $P_N$ du contrôleur de polarisation correspondant, qui est pour cet exemple le contrôleur de polarisation $PC_N$.

Le circuit $CT_N$ comprend en outre un deuxième dispositif de contre-réaction FB2 qui a une entrée reliée à la sortie de l'unité de calcul CU et une sortie fournissant le signal électrique de commande PE reliée à l'entrée de commande électrique du contrôleur de polarisation CP.

Les détecteurs photoélectriques D1 et D2 permettent de mesurer respectivement la puissance Pin du signal total à un facteur d'atténuation K1 près et la puissance Pp du signal polarisé suivant la polarisation du polariseur A à un facteur d'atténuation K2 près. Les détecteurs D1 et D2 fournissent respectivement des signaux de valeurs :

$$P1 = K1.Pin,$$

$$P2 = K2.Pp.$$

Les facteurs d'atténuation K1 et K2 sont constants et sont connus. L'unité de calcul CU calcule le rapport Pp/Pin et active alternativement les dispositifs de contre-réaction FB1 - FB2. Le dispositif de contre-réaction FB2 modifie le signal électrique de commande du contrôleur de polarisation CP de façon à orienter la direction de polarisation privilégiée du signal suivant la polarisation du polariseur A.

Dans ce cas, la valeur du rapport Pp/Pin est maximisée et représente le degré de polarisation du signal qui est une grandeur comprise entre 0 et 1.

Le dispositif de contre-réaction FB1 modifie le signal électrique de commande du contrôleur de polarisation $PC_N$ dans un sens tel que la valeur PL du degré de polarisation mesuré est maximisée. La dispersion de polarisation est alors minimale.

On va maintenant décrire le dispositif de compensation de polarisation destiné à être implanté sur la ligne conformément au système de transmission représenté sur le schéma de la figure 1B. On pourra se reporter au schéma de la figure 4 pour plus de détail sur la réalisation de ce dispositif.

De façon pratique, ce dispositif est très semblable au dispositif qui vient d'être décrit à propos de la figure 2, les différences, comme cela a été dit, proviennent du fait que le dispositif de compensation de polarisation $CDP_I$ dans ce cas fournit un signal multiplexé compensé à sa sortie S pour la transmission sur la ligne au lieu de fournir un signal démultiplexé sur des sorties s1 - $s_N$.

Selon une première variante d'exécution, le signal multiplexé est fourni en sortie du dispositif DDG et plus exactement sur une sortie d'un coupleur CS.

La sortie du générateur de retard différentiel DDG est reliée au coupleur CS qui sur une sortie permet de fournir le signal multiplexé compensé et qui permet sur une autre sortie un prélèvement d'une fraction de ce signal pour la boucle d'asservissement. Ainsi, la fraction du signal optique multiplexé est appliquée à l'entrée E'1 du premier démultiplexeur ODMI, ce démultiplexeur ODM1 extrait le signal du canal λ1 pour le fournir à sa sortie S'1 et cette sortie est reliée à l'entrée du circuit CT1 de commande du contrôleur de polarisation P1.

La sortie S'2 du démultiplexeur ODM1 fournit le signal multiplexé des canaux λ2 à $λ_N$. Le démultiplexeur ODM2 permet de sélectionner et d'extraire le canal λ2 à sa sortie S'1, le signal de canal λ2 fourni par cette sortie est appliqué à l'entrée du circuit de commande CT2 dont la sortie fournit le signal P2 de commande le contrôleur de polarisation PC2. Il en est de même pour les autres démultiplexeurs jusqu'au démultiplexeur $ODM_N$.

Selon une deuxième variante d'exécution correspondant aux traits interrompus sur la figure 4, la sortie du dispositif de compensation de polarisation $CDP_I$ pourrait être prise à la sortie du dernier démultiplexeur, c'est à dire ici à la sortie du démultiplexeur $ODM_N$ au lieu d'être prise à la sortie du générateur de retard différentiel DDG. Pour cela, il ne serait plus nécessaire de placer le coupleur CS à la sortie de ce générateur DDG puisque à ce moment-là, la totalité du signal du multiplex serait prise dans la boucle d'asservissement. En revanche, chaque démultiplexeur délivrerait à sa sortie S'1 seulement une fraction du signal de canal extrait pour fournir à la sortie S'2 le signal optique multiplexé de tous les canaux.

Le signal multiplexé compensé transmis sur la ligne est alors disponible à la sortie S'2 du dernier démultiplexeur ODM$_N$.

On va maintenant détailler les modes de réalisation des différents démultiplexeurs optiques ODM$_N$ pouvant être envisagés dans la réalisation du dispositif de compensation de polarisation conforme à l'invention qu'il s'agisse du dispositif en ligne ou en fin de ligne.

Un premier mode de réalisation correspond au schéma de la figure 5A dans lequel le démultiplexeur a une structure du type comprenant un tronçon de fibres à réseaux de Bragg IFPG avec un circulateur C1 en entrée du tronçon de fibres.

Une deuxième mode de réalisation est illustré par le schéma de la figure 5B. Ce mode de réalisation correspond à une structure interférométrique MZ de type Mach-Zehnder avec tronçon de fibres à réseaux de Bragg IFBG en chaque branche de la structure interférométrique. De manière pratique la fibre d'une branche subit un traitement par illumination aux ultraviolet (UV) pour accorder la différence de phase entre les deux bras de l'interféromètre.

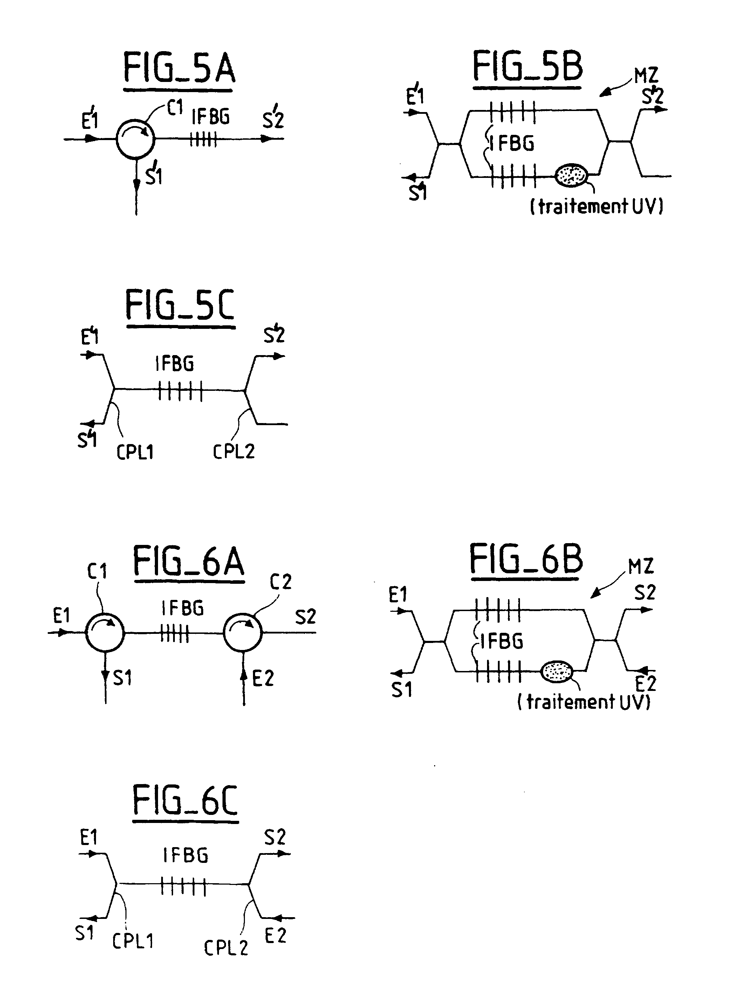

Un troisième mode de réalisation correspond au schéma de la figure 5C. Il s'agit d'une structure de type coupleur à tronçon de fibres à réseaux de Bragg IFBG. Les coupleurs sont référencés respectivement CPL1 et CPL2 sur cette figure.

Les tronçons de fibres à réseaux de Bragg peuvent être des tronçons de fibres dans lesquels le réseau de Bragg est obtenu par exemple par gravure ou photo-inscription.

On va maintenant donner, à titre d'exemple, trois modes de réalisation des dispositifs multiplexeurs optiques à insertion et extraction OADM$_N$.

Un premier mode est représenté par le schéma de la figure 6A. Il correspond à une structure du type comprenant un tronçon de fibres à réseaux de Bragg IFBG avec en chaque extrémité du tronçon de fibres un circulateur C1 - C2.

Un deuxième mode est représenté par le schéma de la figure 6B. Il correspond à une structure interférométrique MZ de type Mach-Zehnder avec tronçons de fibres à réseaux de Bragg IFBG en chaque branche.

Et enfin, un troisième mode de réalisation est illustré par la figure 6C. Selon ce mode de réalisation, le multiplexeur à insertion-extraction a une structure du type coupleur à tronçons de fibres à réseaux de Bragg IFBG, les coupleurs portent les références CPL1 et CPL2.

De la même façon que décrit à propos des figures 5A à 5C, les tronçons de fibres à réseaux de Bragg peuvent avoir un réseau qui est obtenu par gravure ou photo-inscription sur la fibre.

**Revendications**

1. Dispositif de compensation de la dispersion de polarisation des canaux dans un signal à multiplexage en longueur d'onde, **caractérisé en ce qu'**il comprend en cascade une pluralité de modules de contrôle de polarisation associés respectivement auxdits canaux et un générateur à retard différentiel (DDG) délivrant un signal multiplexé compensé, **en ce que** chaque module comprend :

   - un multiplexeur à insertion-extraction (OADM$_N$) ayant une première entrée (E1) pour recevoir un signal d'entrée multiplexé, une première sortie (S1) pour extraire dudit signal d'entrée multiplexé un signal de canal associé, une seconde entrée (E2) pour insérer un signal de canal modifié et une deuxième sortie (S2) pour délivrer un signal de sortie multiplexé modifié,
   - un contrôleur de polarisation (PC$_1$-PC$_N$) apte à recevoir ledit signal de canal extrait et à délivrer ledit signal de canal modifié,

      et **en ce que** le dispositif comprend en outre:

   - une boucle d'asservissement (ODM$_1$-ODM$_N$, CT1-CT$_N$) pour commander les contrôleurs de polarisation (PC$_1$-PC$_N$) en réponse respectivement aux propriétés optiques des signaux de canal dudit signal multiplexé compensé.

2. Dispositif selon la revendication 1, **caractérisé en ce que** la boucle d'asservissement comprend des moyens de démultiplexage (ODM$_1$-ODM$_N$) recevant le signal multiplexé compensé, des sorties d'extraction (S'1) pour en extraire lesdits signaux de canal et des moyens de commande d'asservissement (CT1-CT$_N$) aptes à recevoir au moins une fraction des signaux issus desdites sorties d'extraction (S'1), à en mesurer les degrés de polarisation et à commander les contrôleurs de polarisation (PC1 - PCN) de manière à maximiser lesdits degrés de polarisation mesurés.

3. Dispositif selon la revendication 2, **caractérisé en ce que** les moyens de démultiplexage comportent une pluralité de démultiplexeurs (ODM$_1$-ODM$_N$) munis respectivement de premières sorties (S'1) constituant lesdites sorties d'extraction, munis chacun d'une entrée (E'1) et d'une seconde sortie (S'2), lesdits démultiplexeurs étant montés en cascade au moyen de leurs secondes sorties (S'2) et de leurs entrées (E'1).

4. Dispositif selon l'une des revendications 2 ou 3, **caractérisé en ce que** les moyens de commande d'asservissement (CT1-CT$_N$) comportent pour chaque canal:

- un contrôleur de polarisation (CP) de boucle de contre-réaction,
- des moyens (D2) pour mesurer l'intensité totale de la fraction de signal issus d'une desdites sorties d'extraction (S'1),
- des moyens (D1) pour mesurer l'intensité d'une composante de cette fraction selon une direction de polarisation fixée et pour commander (CU, FB2) le contrôleur de polarisation (CP) de boucle de façon à maximiser cette intensité,
- des moyens (CU) pour calculer le degré de polarisation à partir de ladite intensité totale mesurée et de l'intensité mesurée selon la direction de polarisation fixée,
- des moyens (FB1) de contre-réaction pour commander le contrôleur de polarisation du canal correspondant (CPN) en fonction du degré de polarisation ainsi calculé, de telle façon que ce degré de polarisation soit maximisé.

5. Dispositif selon l'une des revendications 1 à 4, **caractérisé en ce que** pour réaliser une compensation de la polarisation en fin de ligne (CDP$_F$), il comporte une entrée (E) qui correspond à la première entrée (E1) du premier multiplexeur à insertion-extraction (OADM1) de la cascade et N sorties (s1 - s$_N$), N correspondant au nombre de canaux du multiplex d'entrée, lesdites sorties fournissant à travers des coupleur (C1 - C$_N$) des signaux respectivement extraits desdites sorties d'extraction (S'1) des moyens de démultiplexage de la boucle d'asservissement.

6. Dispositif selon l'une des revendications 1 à 4, **caractérisé en ce que** pour réaliser une compensation de la polarisation en ligne (CDB$_I$), il comporte une entrée (E) qui correspond à la première entrée (E1) du premier multiplexeur à insertion-extraction (OADM1) de la cascade et une sortie (S) qui fournit ledit signal multiplexé compensé à travers un coupleur (CS).

7. Dispositif selon la revendication 3, **caractérisé en ce que** pour réaliser une compensation de polarisation en ligne, il comporte une entrée (E) qui correspond à la première entrée (E1) du premier multiplexeur à insertion-extraction (OADM1) de la cascade et une sortie (S) qui correspond à la seconde sortie (S'2) du dernier démultiplexeur (ODM$_N$) de la cascade dans la boucle d'asservissement.

8. Dispositif selon l'une des revendications 1 à 7, **caractérisé en ce que** les multiplexeurs à insertion-extraction (OADM1 - OADM$_N$) ont une structure du type comprenant un tronçon de fibre à réseau de Bragg (IFBG), avec en chaque extrémité du tronçon de fibre un circulateur (C1 - C2).

9. Dispositif selon la revendication 3, **caractérisé en ce que** les démultiplexeurs (ODM1 - ODM$_N$) ont une structure du type comprenant un tronçon de fibre à réseau de Bragg (IFBG) avec un circulateur (C1) en entrée de la fibre.

10. Dispositif selon l'une des revendications 1 à 7, **caractérisé en ce que** les multiplexeurs à insertion-extraction (OADM - OADM$_N$) ont une structure interférométrique de type Mach-Zehnder (MZ) avec un tronçon de fibre à réseau de Bragg (IFBG) en chaque branche.

11. Dispositif selon la revendication 3, **caractérisé en ce que** les démultiplexeurs (ODM1 - ODM$_N$) ont une structure interférométrique de type Mach-Zehnder (MZ) avec un tronçon de fibre à réseau de Bragg (IFBG) en chaque branche.

12. Dispositif selon l'une des revendications 1 à 7, **caractérisé en ce que** les multiplexeurs à insertion-extraction (OADM - OADM$_N$) ont une structure du type coupleurs (CPL1, CPL2) à tronçon de fibre à réseau de Bragg (IFBG).

13. Dispositif selon la revendication 3, **caractérisé en ce que** les démultiplexeurs (ODM1 - ODM$_N$) ont une structure du type coupleurs (CPL1, CPL2) à tronçon de fibre à réseau de Bragg (IFBG).

**Patentansprüche**

1. Vorrichtung zur Kompensation der Polarisationsdispersion der Kanäle in einem Wellenlängenmultiplex-Signal, **dadurch gekennzeichnet, dass** sie in Stufen über eine Vielzahl von Polarisationsregelungsmodulen verfügt, die jeweils den genannten Kanälen zugeordnet sind, sowie über einen PMD-Verzögerungsgenerator (DDG), der ein kompensiertes Multiplexsignal aussendet, und dass jedes Modul Folgendes umfasst:

- Einen Add-Drop-Multiplexer (OADM$_N$) mit einem ersten Eingang (E1) zum Empfang eines Multiplex-Eingangssignals, einem ersten Ausgang (S1), um aus dem genannten Multiplex-Eingangssignal ein entsprechendes Kanalsignal herauszufiltern, einem zweiten Eingang (E2), um ein verändertes Kanalsignal einzufügen, sowie einem zweiten Ausgang (S2), um ein verändertes Multiplex-Ausgangssignal auszusenden,
- einen Polarisationsregler (PC$_1$-PC$_N$) , der dazu geeignet ist, das herausgefilterte Kanalsignal zu empfangen und das veränderte Kanalsignal auszusenden,

wobei die Vorrichtung ferner Folgendes umfasst:

- einen Regelkreis (ODM$_1$-ODM$_N$, CT1-CT$_N$), um die Polarisationsregler (PC$_1$-PC$_N$) in ihrem Verhalten gegenüber den optischen Eigenschaften der Kanalsignale des genannten, kompensierten Multiplexsignals zu steuern.

2. Vorrichtung gemäß Anspruch 1, **dadurch gekennzeichnet, dass** der Regelkreis über Demultiplexierungsmittel (ODM$_1$-ODM$_N$), die das kompensierte Multiplexsignal empfangen, über Ausfilterungsausgänge (S'1), um daraus die genannten Kanalsignale herauszufiltern, sowie über Regelungsmittel (CT1-CT$_N$) verfügt, die dazu geeignet sind, zumindest einen Anteil der von den genannten Ausfilterungsausgängen (S'1) kommenden Signale zu empfangen, deren Polarisationsgrade zu messen und die Polarisationsregler (PC1 - PCN) so zu steuern, dass die gemessenen Polarisationsgrade maximiert werden.

3. Vorrichtung gemäß Anspruch 2, **dadurch gekennzeichnet, dass** die Demultiplexierungsmittel über eine Vielzahl von Demuliplexern (ODM$_1$-ODM$_N$) verfügen, die jeweils mit ersten Ausgängen (S'1), die die genannten Ausfilterungsausgänge darstellen, sowie jeweils mit einem Eingang (E'1) und einem zweiten Ausgang (S'2) ausgestattet sind, wobei die genannten Demultiplexer mittels ihrer zweiten Ausgänge (S'2) und ihrer Eingänge (E'1) in Stufen montiert sind.

4. Vorrichtung gemäß einem der Ansprüche 2 oder 3, **dadurch gekennzeichnet, dass** die Regelungsmittel (CT1-CT$_N$) für jeden Kanal über Folgendes verfügen:

- einen Polarisationsregler (CP) mit Gegenkopplungsschleife,
- Mittel (D2) zur Messung der Gesamtintensität des Signalanteils aus einem der genannten Ausfilterungsausgänge (S'1),
- Mittel (D1) zur Messung der Intensität einer Komponente dieses Anteils gemäß einer festgelegten Polarisationsrichtung und zur Steuerung (CU, FB2) des Polarisationsreglers (CP) des Regelkreises, um diese Intensität zu maximieren,
- Mittel (CU) zur Berechnung des Polarisationsgrades aufgrund der genannten gemessenen Gesamtintensität und der gemäß der festgelegten Polarisationsrichtung gemessenen Intensität,
- Gegenkopplungsmittel (FB1) zur Steuerung des Polarisationsreglers des entsprechenden Kanals (CPN) in Abhängigkeit von dem somit berechneten Polarisationsgrad, sodass dieser Polarisationsgrad maximiert wird.

5. Vorrichtung gemäß einem der Ansprüche 1 bis 4, **dadurch gekennzeichnet, dass** sie zwecks einer Polarisationskompensation am Ende der Leitung (CDP$_F$) über einen Eingang (E), der dem ersten Eingang (E1) des ersten Add-Drop-Multiplexers (OADM1) der Stufen entspricht, sowie über N Ausgänge (s1 - sN) verfügt, wobei N der Anzahl von Kanälen des Eingangs-Multiplexsignals entspricht und die genannten Ausgänge über die Koppler (C1 - CN) Signale übermitteln, die jeweils von den genannten Ausfilterungsausgängen (S'1) der Demultiplexierungsmittel des Regelkreises kommen.

6. Vorrichtung gemäß einem der Ansprüche 1 bis 4, **dadurch gekennzeichnet, dass** sie zwecks einer Polarisationskompensation in der Leitung (CDB$_I$) über einen Eingang (E), der dem ersten Eingang (E1) des ersten Add-Drop-Multiplexers (OADM1) der Stufen entspricht, sowie über einen Ausgang (S) verfügt, der das genannte kompensierte Multiplexsignal über einen Koppler (CS) übermittelt.

7. Vorrichtung gemäß Anspruch 3, **dadurch gekennzeichnet, dass** sie zwecks einer Polarisationskompensation in der Leitung über einen Eingang (E), der dem ersten Eingang (E1) des ersten Add-Drop-Multiplexers (OADM1) der Stufen entspricht, sowie über einen Ausgang (S) verfügt, der dem zweiten Ausgang (S'2) des letzten Demultiplexers (ODM$_N$) der Stufen in dem Regelkreis entspricht.

8. Vorrichtung gemäß einem der Ansprüche 1 bis 7, **dadurch gekennzeichnet, dass** die Add-Drop-Multiplexer (OADM1 - OADM$_N$) eine Struktur mit einer Faserstrecke mit Bragg-Gitter (IFBG) aufweisen, wobei sich an jedem Ende der Faserstrecke ein Zirkulator (C1 - C2) befindet.

9. Vorrichtung gemäß Anspruch 3, **dadurch gekennzeichnet, dass** die Demultiplexer (ODM1 - ODM$_N$) eine Struktur aufweisen, die über eine Faserstrecke mit Bragg-Gitter (IFBG) und einem Zirkulator (C1) am Eingang der Faser verfügt.

10. Vorrichtung gemäß einem der Ansprüche 1 bis 7, **dadurch gekennzeichnet, dass** die Add-Drop-Multiplexer (OADM - OADM$_N$) eine interferometrische Struktur vom Typ Mach-Zehnder (MZ) mit einer Faserstrecke mit Bragg-Gitter (IFBG) in jedem Zweig aufweisen.

11. Vorrichtung gemäß Anspruch 3, **dadurch gekennzeichnet, dass** die Demultiplexer (ODM1 - ODM$_N$) eine interferometrische Struktur vom Typ Mach-Zehnder (MZ) mit einer Faserstrecke mit Bragg-Gitter (IFBG) in jedem Zweig aufweisen.

**12.** Vorrichtung gemäß einem Ansprüche 1 bis 7, **dadurch gekennzeichnet, dass** die Add-Drop-Multiplexer (OADM - OADM$_N$) eine Struktur mit Kopplern (CPL1, CPL2) mit einer Faserstrecke mit Bragg-Gitter (IFBG) aufweisen.

**13.** Vorrichtung gemäß Anspruch 3, **dadurch gekennzeichnet, dass** die Demultiplexer (ODM1 - ODM$_N$) eine Struktur mit Kopplern (CPL1, CPL2) mit einer Faserstrecke mit Bragg-Gitter (IFBG) aufweisen.

**Claims**

**1.** A system for compensating polarization dispersion of channels in a wavelength-division multiplex signal, the system being **characterized in that** it comprises a plurality of cascaded polarization control modules respectively associated with said channels and a differential delay generator (DDG) delivering a compensated multiplex signal, **in that** each module comprises:

- a drop and insert multiplexer (OADM$_N$) having a first input (E1) for receiving a multiplex input signal, a first output (S1) for an associated channel signal extracted from said multiplex input signal, a second input (E2) for inserting a modified channel signal and a second output (S2) for delivering a modified multiplex output signal, and
- a polarization controller (PC$_1$ - PC$_N$) adapted to receive said extracted channel signal and to deliver said modified channel signal,

and **in that** the system further comprises a control loop (ODM$_1$ - ODM$_N$, CT$_1$ - CT$_N$) for controlling the polarization controllers (PC$_1$ - PC$_N$) in response to respective optical properties of the channel signals of said compensated multiplex signal.

**2.** A system according to claim 1, **characterized in that** the control loop comprises demultiplexer means (ODM$_1$ - ODM$_N$) receiving the compensated multiplex signal, extraction outputs (S'1) for said channel signals extracted therefrom and control means (CT$_1$ - CT$_N$) adapted to receive at least a portion of the signals from said extraction outputs (S'1), to measure the degrees of polarization thereof and to control the polarization controllers (PC$_1$ - PC$_N$) to maximize said measured degrees of polarization.

**3.** A system according to claim 2, **characterized in that** the demultiplexer means include a plurality of demultiplexers (ODM$_1$ - ODM$_N$) having respective outputs (S'1) constituting said extraction outputs and each having an input (E'1) and a second output (S'2), said demultiplexers being connected in cascade by means of their second outputs (S'2) and their inputs (E'1).

**4.** A system according to claim 2 or claim 3, **characterized in that** the control means (CT$_1$ - CT$_N$) for each channel include:

- a feedback loop polarization controller (CP),
- means (D2) for measuring the total intensity of the portion of the signal from one of said extraction outputs (S'1),
- means (D1) for measuring the intensity of a component of that portion in a fixed polarization direction and for controlling (CU, FB2) the loop polarization controller (CP) to maximize that intensity,
- means (CU) for calculating the degree of polarization from said measured total intensity and the measured intensity in the fixed polarization direction, and
- feedback means (FB1) for controlling the polarization controller of the corresponding channel (CPN) in accordance with the degree of polarization calculated in this way in order to maximize the degree of polarization.

**5.** A system according to any one of claims 1 to 4, **characterized in that**, for compensating polarization at the end of the line (CDP$_F$), it has an input (E) which corresponds to the first input (E1) of the first drop and insert multiplexer (OADM$_1$) of the cascade and N outputs (s$_1$ - s$_N$), N corresponding to the number of input multiplex channels and said outputs supplying via couplers (C$_1$ - C$_N$) respective signals extracted from said extraction outputs (S'1) of the demultiplexing means of the control loop.

**6.** A system according to any one of claims 1 to 4, **characterized in that**, to compensate polarization in-line (CDB$_1$), it has an input (E) which corresponds to the first input (E1) of the first drop and insert multiplexer (OADM$_1$) of the cascade and an output (S) which supplies said compensated multiplex signal via a coupler (CS).

**7.** A system according to claim 3, **characterized in that**, to compensate polarization in-line, it has an input (E) which corresponds to the first input (E1) of the first drop and insert multiplexer (OADM$_1$) of the cascade and an output (S) which corresponds to the second output (S'1) of the last demultiplexer (ODM$_N$) of the cascade in the control loop.

**8.** A system according to any one of claims 1 to 7, **characterized in that** the drop and insert multiplexers (OADM$_1$ - OADM$_N$) have a structure comprising a fiber segment with in-fiber Bragg gratings (IFBG) and a circulator (C1 - C2) at each end of the fiber segment.

9. A system according to claim 3, **characterized in that** the demultiplexers (ODM$_1$ - ODM$_N$) have a structure comprising a fiber segment with in-fiber Bragg gratings (IFBG) and a circulator (C1) at the fiber entry.

10. A system according to any one of claims 1 to 7, **characterized in that** the drop and insert multiplexers (OADM$_1$ - OADM$_N$) have a Mach-Zehnder interferometer structure (MZ) with a fiber segment with in-fiber Bragg gratings (IFBG) in each branch.

11. A system according to claim 3, **characterized in that** the demultiplexers (ODM$_1$ - ODM$_N$) have a Mach-Zehnder interferometer structure (MZ) with a fiber segment with in-fiber Bragg gratings (IFBG) in each branch.

12. A system according to any one of claims 1 to 7, **characterized in that** the drop and insert multiplexers (OADM$_1$ - OADM$_N$) have a coupler structure (CPL1, CPL2) with fiber segments with in-fiber Bragg gratings (IFBG).

13. A system according to claim 3, **characterized in that** the demultiplexers (ODM$_1$ - ODM$_N$) have a coupler structure (CPL1, CPL2) with fiber segments with in-fiber Bragg gratings (IFBG).

## FIG_1A

## FIG_1B

FIG_2

FIG_3

# FIG_4

## FIG_5A

E1 → C1 IFBG → S2
S1 ↓

## FIG_5B

E1 MZ S2
IFBG
S1
(traitement UV)

## FIG_5C

E1 → S2
IFBG
S1
CPL1    CPL2

## FIG_6A

C1    C2
E1 → IFBG → S2
S1 ↓    ↑ E2

## FIG_6B

E1 MZ S2
IFBG
S1    E2
(traitement UV)

## FIG_6C

E1 → IFBG → S2
S1    CPL1    CPL2    E2